# EUROPEAN PATENT APPLICATION

(11) **EP 4 528 449 A1**
(43) Date of publication of application: **26.03.2025**
(21) Application number: 23896623.8
(22) Date of filing: 22.11.2023
(51) Int. Cl.: G06F 3/0481

(54) **INTERACTION METHOD AND APPARATUS BASED ON MULTIMEDIA OBJECT, ELECTRONIC DEVICE, AND STORAGE MEDIUM**

(30) Priority: 29.11.2022 CN 202211517374
(71) Applicant: Beijing Zitiao Network Technology Co., Ltd., Beijing 100190 (CN)
(72) Inventor: WANG, Yuxiao, Beijing 100028 (CN); PENG, Guanyuan, Beijing 100028 (CN)
(74) Representative: Williams, Michael David
(86) International application number: PCT/CN2023/133322
(87) International publication number: WO 2024/114472

(57) **Abstract**

The embodiment of the disclosure provides an interaction method based on multimedia objects, apparatus, electronic device and a storage medium. The method includes: displaying user identification information of at least one target user in a display interface; the target user is a user who posts a target multimedia object; determining a display mode of a target multimedia object corresponding to a triggered user identification information based on a triggering operation on the user identification information and a posting state of a current user; and displaying the target multimedia object based on the display mode.

## Description

### CROSS REFERENCE TO RELATED APPLICATION

This application claims priority from Chinese Patent Application No. 202211517374.1, filed on November 29, 2022, the contents of which are hereby incorporated by reference in their entirety for all purposes.

### TECHNICAL FIELD

The embodiment of the disclosure relates to the technical field of internet, in particular to an interaction method based on multimedia objects, apparatus, electronic device and a storage medium.

### BACKGROUND

With the development of network technology, more and more application programs enter the life of users. Particularly, a series of entertainment platforms on which the users can post their own favorites and focus on the favorites of other users are popular with the users.

At present, a plurality of application software has a certain attribute of posting multimedia object, and a user can share a multimedia object with other users through the application software, so that the shared user can view the multimedia object.

### SUMMARY

According to one aspect of the present application, embodiments of the present disclosure provide an interaction method based on multimedia objects, including:
displaying user identification information of at least one target user in a display interface; the target user is a user who posts a target multimedia object;
determining a display mode of a target multimedia object corresponding to a triggered user identification information based on a triggering operation on the user identification information and a posting state of a current user; and
displaying the target multimedia object based on the display mode.

According to another aspect of the present application, embodiments of the present disclosure provide an interactive apparatus based on multimedia objects, including:
a user information display module configured to display user identification information of at least one target user in a display interface; the target user is a user who posts a target multimedia object;
a display mode determining module configured to determine a display mode of a target multimedia object corresponding to a triggered user identification information based on a triggering operation on the user identification information and a posting state of a current user; and
a multimedia object display module configured to display the target multimedia object based on the display mode.

According to another aspect of the present application, embodiments of the present disclosure provide an electronic device, includes:
one or more processors;
a storage device to store one or more programs, and
the one or more programs, when executed by the one or more processors, cause the one or more processors to perform the interaction method based on multimedia object of any one of the embodiments of the present disclosure.

According to another aspect of the present application, embodiments of the present disclosure provide a storage medium containing computer-executable instructions, when executed by a computer processor, performing the interaction method based on multimedia object of any one of the embodiments of the present disclosure.

### BRIEF DESCRIPTION OF THE DRAWINGS

The above and other features, advantages, and aspects of embodiments of the present disclosure will become more apparent by referring to the following detailed description when taken in conjunction with the accompanying drawings. Throughout the drawings, the same or similar reference numbers refer to the same or similar elements. It should be understood that the drawings are schematic and that elements and components are not necessarily drawn to scale.
Fig. 1 is a schematic flowchart illustrating an interaction method based on multimedia objects provided by an embodiment of the present disclosure;
Fig. 2 is a schematic diagram of a posting row in a target client provided by an embodiment of the disclosure;
Fig. 3 is a schematic diagram of a posting row in a target client provided by an embodiment of the disclosure;
Fig. 4 is a schematic diagram of a user recommendation display page provided by an embodiment of the present disclosure;
Fig. 5 is a schematic diagram of a display page provided by an embodiment of the present disclosure;
Fig. 6 is a schematic diagram of a play control in the multimedia object display interface provided by an embodiment of the present disclosure;
Fig. 7 is a comparison diagram of the display form in the multimedia object display interface provided by the embodiment of the present disclosure;
Fig. 8 is a schematic diagram of a multimedia object display interface provided by an embodiment of the present disclosure;
Fig. 9 is a flowchart illustrating a interaction method based on multimedia object provided by an embodiment of the present disclosure;
Fig. 10 is a schematic diagram of a prompt display content provided by an embodiment of the present disclosure;
Fig. 11 is a schematic diagram illustrating an interactive apparatus based on multimedia objects according to an embodiment of the present disclosure;
Fig. 12 is a schematic structural diagram of an electronic device provided by an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure can be embodied in various forms and should not be construed as limited to the embodiments set forth herein, but rather are provided for a more complete and thorough understanding of the present disclosure. It should be understood that the drawings and the embodiments of the disclosure are for illustration purposes only and are not intended to limit the scope of the disclosure.

It should be understood that the various steps recited in method embodiments of the present disclosure can be performed in a different order, and/or performed in parallel. Moreover, method embodiments can include additional steps and/or omit performing the illustrated steps. The scope of the present disclosure is not limited in this respect.

The term "including" and variations thereof as used herein is intended to be open-ended, i.e., "including but not limited to". The term "based on" is "based at least in part on". The term "one embodiment" means "at least one embodiment"; the term "another embodiment" means "at least one additional embodiment"; and the term "some embodiments" means "at least some embodiments". Relevant definitions for other terms will be given in the following description.

It should be noted that the terms "first", "second", and the like in the present disclosure are only used for distinguishing different devices, modules or units, and are not used for limiting the order or interdependence of the functions performed by the devices, modules or units.

It is noted that references to "a", "an", and "a plurality of' in this disclosure are intended to be illustrative rather than limiting, and that those skilled in the art will appreciate that references to "one or more" are intended to be exemplary and not limiting unless the context clearly indicates otherwise.

The names of messages or information exchanged between devices in the embodiments of the present disclosure are for illustrative purposes only, and are not intended to limit the scope of the messages or information.

It is understood that, before the technical solutions disclosed in the embodiments of the present disclosure are used, the user should be informed of the type, the use range, the use scene, and so forth of the personal information related to the present disclosure in a proper manner according to the relevant laws and regulations and obtain the authorization of the user.

For example, in response to receiving a user's active request, prompt information is sent to the user to explicitly prompt the user that the requested operation to be performed would require acquisition and use of personal information of the user. Thus, the user can autonomously select whether to provide personal information to software or hardware such as an electronic device, an application program, a server, or a storage medium that performs the operations of the technical solution of the present disclosure, according to the prompt information.

As an alternative but non-limiting implementation, in response to receiving an active request from the user, the manner of sending the prompt information to the user can be, for example, a pop-up window, and the prompt information can be presented in a text manner in the pop-up window. In addition, a selection control for providing personal information to the electronic device by the user's selection of "agree" or "disagree" can be carried in the pop-up window.

It is understood that the above notification and user authorization process is only illustrative and is not intended to limit the implementation of the present disclosure, and other ways of satisfying the relevant laws and regulations can be applied to the implementation of the present disclosure.

It will be appreciated that the data referred to in this disclosure, including but not limited to the data itself and the acquisition or use of the data, should comply with the requirements of the applicable laws and regulations and related regulations.

Before the technical solution is introduced, an application scenario can be exemplarily described. The technical solution of the embodiment of the disclosure can be applied to any scene needing to post the multimedia object. For example, the method provided by the embodiment of the present disclosure can be manufactured as a component having a function of posting a multimedia object integrated in existing software, or can be integrated in corresponding software as a special effect props. The specific application scenario of the method can be as follows: if the prompt information of the posting multimedia object is received, determining corresponding prompt display content according to the current playing state of the multimedia object to be posted, and then posting a corresponding target multimedia object based on the prompt display content. Correspondingly, after the target multimedia object is posted, the user identification information of the user posting the target multimedia object can be displayed on the display interface, so that the display mode of the target sharing object shared by the triggered target user identification information is determined based on the triggering operation on the user identification information on the display interface and the posting state of the triggering user, and then the display is performed based on the display mode.

The interactive apparatus based on multimedia objects provided by the embodiment of the present disclosure can be integrated into application software supporting a multimedia object posting function, and the application software can be installed in an electronic device. Optionally, the electronic device can be a mobile terminal or a PC terminal. The application software can be a type of software for audio/video processing, and specific application software thereof is not described herein any more, as long as audio/video processing can be implemented. The system can also be a specially developed application program to realize software for listening to audio, watching video and posting audio and video, or be integrated in a corresponding page, and a user can realize the processing of the audio and video through the page integrated in the PC terminal.

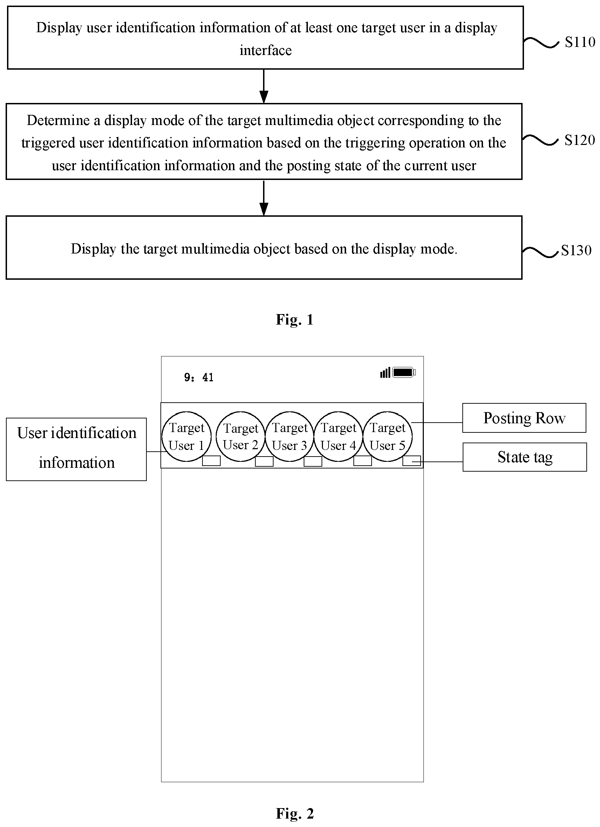

Fig. 1 is a schematic flowchart of an interaction method based on a multimedia object according to an embodiment of the present disclosure. The embodiment of the present disclosure is applicable to a situation where a multimedia object is posted, and the method can be executed by an interaction apparatus of the multimedia object, and the apparatus can be implemented in a form of software and/or hardware. Optionally the apparatus can be implemented by an electronic device. The electronic device can be a mobile terminal, a PC terminal, or a server. The technical solution provided by the embodiment of the disclosure can be executed on the client side, can also be executed on the server side, and can also be executed based on the cooperation of the client side and the server side.

As shown in Fig. 1, the method includes:
S110, displaying user identification information of at least one target user in a display interface.

The display interface is a display page of the target client. The at least one target user can include one or more target user. The at least one target user includes a user for posting the target multimedia object and/or a user corresponding to the current client. The target multimedia object is a multimedia object finally posted by a target user, for example, the multimedia object can be audio-video content. The user identification information can be understood as a user's avatar, nickname, etc.

It can be understood that the user avatar information of the target user who posts the target multimedia object can be presented in the display interface, or not only the user avatar information of the target user who posts the target multimedia object but also the avatar information of the user corresponding to the current client can be presented in the display interface. The advantage of displaying at least one target user identification information is that it can be determined at a glance which users post the target multimedia object, thereby facilitating the viewing of the user corresponding to the current client.

On the basis of the above embodiment, at least the user identification information of one target user and the corresponding state tag can be displayed in the display interface.

The state tag is corresponding to the playing state of the target multimedia object when the target multimedia object is posted. Optionally, the state tags can include at least three types, i.e., a first state tag, a second state tag, a third state tag, or more state tags. The tag contents of the state tags can be determined according to actual requirements in a development or application stage. Optionally, the first state tag corresponds to a "playing tag", the second state tag corresponds to a "recently listened tag", and the third state tag corresponds to a "frequently listening tag". For example, if the playing state when the target multimedia object is posted is the playing state, the corresponding state tag is a "playing tag". If the playing state of the target multimedia object is a state that it is not being played and has been played within a preset duration, the corresponding state tag is a "recently listened tag". If the playing state of the target multimedia object is a state that it is not being played, and the frequency of playing the target multimedia object in the preset time exceeds the preset frequency, the corresponding state tag is a "frequently listening tag".

It can be understood that not only the user identification information of at least one target user can be displayed, but also the state tag can be displayed at a position corresponding to the user identification information, so that when each target user posts a target multimedia object, the playing state or the playing data of the corresponding target multimedia object can be determined based on the state tag.

Exemplary, schematic diagram of the posting row in each target client can be seen in Fig. 2. As shown in Fig. 2, the top of the display interface is a posting row, the user identification information of 5 target users is shown in the posting row, and the lower right corner of each user identification information is a corresponding state tag.

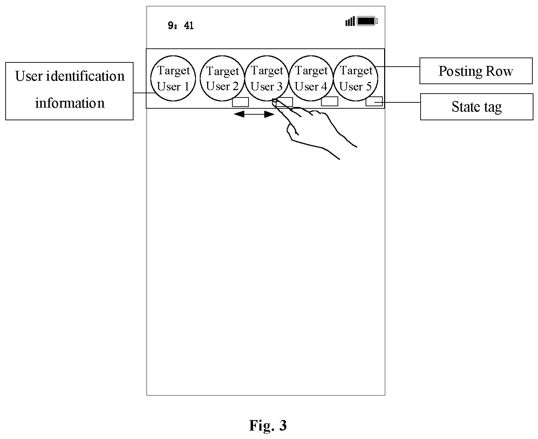

For example, the user identification information of the current user can be inserted into the first position of the posting row of the display interface corresponding to the current user. No matter what the corresponding posting state of the current user is, the user identification information of the current user A is inserted into the first position of the posting row of the current user A display page, and a schematic diagram of the posting row of the current user A in the display page is shown in Fig. 3. As shown in Fig. 3, the user identification information of the current user A is displayed at the first position of the posting row of the display page.

In this embodiment, a plurality of user identification information can be displayed in the posting row, and in order to determine a display order of the plurality of user identification information in the posting row, the display order can be: determining the arrangement information of the corresponding user identification information according to the corresponding post timestamp, post frequency or whether the user identification information has been read or not of each target multimedia object, so as to display the corresponding user identification information according to the arrangement information.

For example, the difference between the post timestamp and the current timestamp of each target multimedia object can be calculated, and the user identification information corresponding to each target multimedia object can be sequentially arranged according to the sequence from the small to large difference of timestamp. Otherwise, the user identification information corresponding to each target multimedia object is sequentially arranged according to the descending order of the post frequency. Further, the user identification information corresponding to the unread target multimedia objects can be preferentially placed at the front position in the posting row. For a plurality of unread target multimedia objects, the user identification information corresponding to each target multimedia object is further sequentially arranged according to the order of the difference of the timestamps or the post frequency. Similarly, for a plurality of read target multimedia objects, the user identification information corresponding to each target multimedia object can also be arranged in sequence according to the order of the difference of the timestamps or the post frequency. The benefit of this arrangement is: determining the arrangement information of the plurality of user identification information based on the plurality of quantitative indexes, so that the user identification information corresponding to the user with high activity degree is displayed in the front of the posting row, and the user interaction operation is facilitated.

In this embodiment, since the display space of the display page is limited, only a limited number of user identification information can be displayed in a default posting row of the display page, and in order to meet the actual requirement of the user to view more user identification information, more user identification information can be displayed through an activity operation on the posting row. Optionally, the posting row includes at least one piece of user identification information, and the expansion operation is performed based on the sliding operation on the posting row to display more user identification information.

For example, referring to Fig. 3, more user identification information can be displayed in the posting row by sliding left or right by the user. For example, the user can see more user identification information to the left of the finger's point of contact with the display interface by sliding the user's finger to the right, and the user can see more user identification information to the right of the finger's point of contact with the display interface by sliding the user's finger to the left.

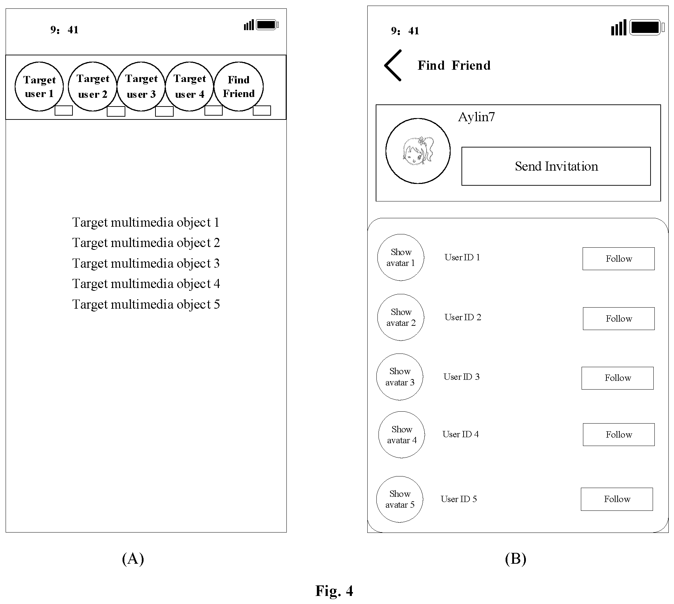

In this embodiment, a "find friends" entry can reside in the last display location of the posting row, see part (A) of Fig. 4. The user-triggered "find friends" entry can lead to the user recommendations display page, see part (B) of Fig. 4. As shown in part (B) of Fig. 4, other users that can be of interest can be recommended to the user. Optionally, the other friends recommended to the user can be determined based on potential relationships of the common friends and the target multimedia object record.

S120, determining a display mode of the target multimedia object corresponding to the triggered user identification information based on the triggering operation on the user identification information and the posting state of the current user.

Wherein the post state can be used to characterize the state of whether the current user has posted the target multimedia object. The post state of the current user can include two states: one state is a posted state and the other state is an unposted state. The posted state indicates that the user has posted the target multimedia object, and the unposted state indicates that the current user has not posted the target multimedia object. The display mode is the presentation form of the target multimedia object in the current user display page.

In order to enable other users to see more detailed content of the target multimedia object, associated content corresponding to the target multimedia object can be determined, and when the triggered user identification information is detected, a display mode of the associated content is determined based on the posting state of the triggered user identification information. Determining associated content corresponding to the target multimedia object, including: determining the segment content or the entire content corresponding to the target multimedia object, the multimedia cover page, the participating user, the appreciation timestamp, the name information, and/or the user identification information of the target client as associated content.

The clip content can be a portion of the video frames of the album video corresponding to the target multimedia object, for example, the clip content can be 30 seconds of the chorus in the album video of the target multimedia object. The entire content can be the entire audio and video frame. The multimedia cover can be determined based on the original audio and video cover to which the target multimedia object belongs, or dynamically generated based on the highlight clips. The participant is the author of the audio information in the target multimedia object. The appreciation timestamp is the corresponding time when the user appreciates the target multimedia object. The name information is the text information corresponding to the name of the audio information in the target multimedia object. The user identification information of the target client can include an avatar, a nickname and so forth of the target user.

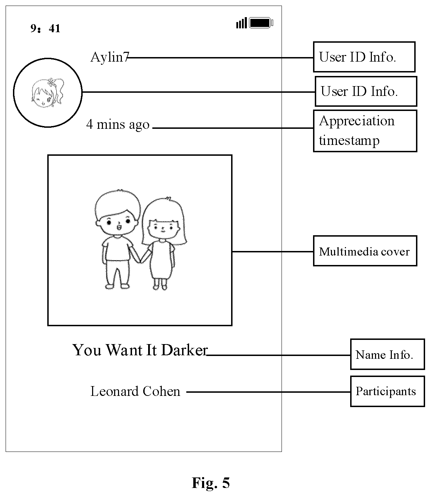

For example, a schematic diagram of the associated content of the target multimedia object in a display page can be seen in Fig. 5. As shown in Fig. 5, the circular icon at the top left corner in the display page is the avatar identifier of the target user, "Aylin 7" at the right side of the circular icon is the user identification information (User ID Info.) of the target software, "4 mins ago" at the right side of the circular icon is the appreciation timestamp, the rectangular frame in the middle part of the display page is the multimedia cover, a clip can be displayed in the multimedia cover, the "You Want it Darker" at the lower end of the rectangular frame is the name information (Name Info.), and the "Leonard Cohen" at the lower end of the rectangular frame is the part for displaying the participants. The benefit of this arrangement is: the associated content includes the comprehensive and rich associated content of the target multimedia object, and other users can quickly and conveniently know the target multimedia object.

In this embodiment, the posting state includes a posted state or an unposted state. Correspondingly, the display mode includes: a first display mode corresponding to the posted state and a second display mode corresponding to the unposted state. The first display mode and the second display mode are different in visualization parameter of the contents associated with target multimedia object.

The first display mode is a display mode corresponding to a target multimedia object posted by the current user, and the second display mode is a display mode corresponding to a target multimedia object not posted by the current user.

In this embodiment, the display mode in the display page is associated with the posting state of the current user. The display interface seen by the current user who has posted the target multimedia object is different from the display interface seen by the current user who has not posted the target multimedia object. The benefit of this arrangement is: more users are encouraged to post the target multimedia objects, which can be used as an incentive mechanism for posting the target multimedia objects, so that the user interest is promoted.

Specifically, the current user can trigger any user identification information in the display interface to display the target multimedia object corresponding to the user identification information triggered by the current user. In the display process, the current user has different posting states, and the display modes corresponding to the target multimedia are different. If the posting state of the current user is a posted state, the display mode of the target multimedia is a first display mode, and if the posting state of the current user is an unposted state, the display mode of the target multimedia is a second display mode.

On the basis of the above embodiment, the visualization degree corresponding to the first display mode includes that all associated content is visible, and the visualization degree corresponding to the second display mode includes that the associated content is invisible and/or information guiding the posting of the target multimedia object is displayed.

In this embodiment, if the posting state of the current user is the posted state, the display is performed in the first display mode in the display interface for displaying the target multimedia object, that is, the associated content can be clearly displayed. If the posting state of the current user is an unposted state, the associated content is displayed in a second display mode. Optionally, the associated content seen by the current user is incomplete, for example, the target multimedia object and part of the associated content are in a semi-occluded display form, or the associated content is occluded in a mosaic form, so that the current user cannot clearly see the multimedia object shared by the target user.

On the basis of the above, if the post state of the current user is an unposted state, it is possible to display the display parameters for guiding the posting of the target multimedia object. For example, a display frame showing guide language "Share what you are listening now" is displayed in the display page of the current user, so that the user can post the target multimedia object after seeing the guide language. The benefit of this arrangement is: the user who has posted the target multimedia object can see the whole content of the target multimedia object posted by other users, so as to encourage more users to post the target multimedia object.

Optionally, if the control for playing the target multimedia object is triggered by the current user in the posted state, the segment content or the entire content of the target multimedia object is played.

The clip content can be a portion of a video frame of the album video corresponding to the target multimedia object, for example, the clip content can be 30 seconds of the chorus in the album video of the target multimedia object.

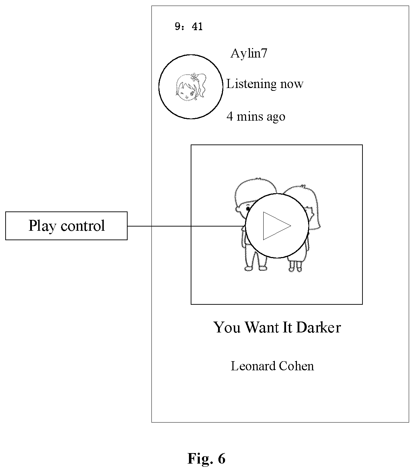

In this embodiment, a play control can be preconfigured in the target multimedia object, see Fig. 6. As shown in Fig. 6, if the current user has already posted the target multimedia object, when the user triggers the play control, the clip content of the target multimedia object can be played. For example, when the user triggers the play control, the 30 second audio/video content of the climax in the target audio can be played in a loop. The benefit of this arrangement is: the user can appreciate the most wonderful segment content of the target multimedia object by one key, and quickly understand whether the user is interested in the segment content or not can be quickly known, so as to improve the use convenience of the user.

On the basis of the above embodiment, if the current user in the unposted state triggers the user identification information, the associated content of the target multimedia object associated with the user identification information is displayed in the second display mode.

In this embodiment, if the current user in the unposted state triggers the user identification information, a second display mode is adopted when the associated content of the target multimedia object associated with the user identification information is displayed, that is, only part of the associated content of the target multimedia object is displayed. For example, the associated content of the target multimedia object is semi-occluded.

S130, displaying the target multimedia object based on the display mode.

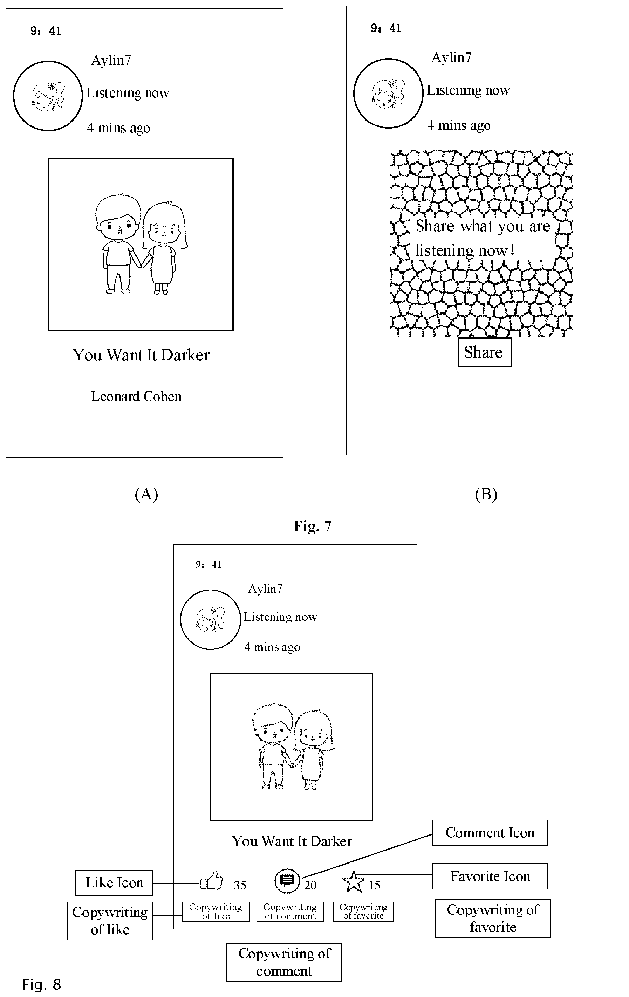

In this embodiment, after the display mode is determined, the target multimedia object is displayed based on the display mode. For example, if the finally determined display mode is the first display mode, the display form of the current user display interface is as shown in Fig. 7 (a), and the target multimedia object and all the associated content can be clearly presented. If the finally determined display mode is the second display mode, the display form of the display interface of the current user is as shown in Fig. 7 (B), and only part of the associated content of the target multimedia object and the associated content can be seen.

On the basis of the above technical solutions, the method can further include: displaying the number of likes corresponding to the target multimedia object, the copywriting of like corresponding to the number of likes and the information of the like user in a multimedia object display interface; and/or displaying the favorite information corresponding to the target multimedia object in a multimedia object display interface.

The information of the like user includes a head portrait and a nickname of the like user, and is arranged based on the like timestamp.

In this embodiment, in order to enable the user to visually see the comment and the like of other users on the target multimedia object and enhance the interactivity between users, the interactive information corresponding to the target multimedia object can be displayed in the multimedia object display interface. In addition, the favorite information corresponding to the target multimedia object can also be displayed in the multimedia object display interface. So that the user can know the favorite degree of the current target multimedia object, the comment information on the current target multimedia object by other users, and which users trigger the like or favorite of the current target multimedia object.

For example, referring to Fig. 8, the icon at the lowest left side in the multimedia object display interface is a like icon, the number adjacent to the like icon can represent the number of likes corresponding to the target multimedia object, the icon at the lowest middle side is a comment icon and the number of comments corresponding thereto, and the icon at the lowest right side is a favorite icon and the number of favorites corresponding thereto. The copywriting of like corresponding to the number of likes are arranged below the like icons, the corresponding copywriting of like is different for different number of likes, so that the user can clearly know the preference of other users on the current target multimedia object. For example, when the number of likes is 1, the copywriting of like can be: "User S likes you"; when the number of likes is 2, the copywriting of like can be: "User S, user G like you"; when the number of likes is greater than the preset threshold, the copywriting of like can be: "Many people like it, it is recommended to favorite it". In practical application, corresponding controls can be preset on the three icons, and when a user triggers the corresponding control, a floating layer interface can be displayed. When a user triggers a control corresponding to like, comment or favorite icon, the corresponding user avatar and the corresponding nickname are displayed in the floating layer interface. When a plurality of user avatars exist, the arrangement sequence of the user avatars is sorted according to the corresponding timestamps when the user triggers like, comment or favorite controls, and the sorting is carried out according to the difference value between the current timestamp and the triggering timestamp from small to large. If the user clicks on a blank space on the displayed page, the floating layer interface can be collapsed.

In this embodiment, if the user B likes, comments, or favorites the target multimedia object posted by the user A, the corresponding pop-up information can be pushed to the user A. For example, the pop-up information can be: "user B likes your post".

On the basis of the above technical solutions, the method further includes: when the display duration of the user identification information reaches a preset display duration threshold, not displaying the user identification information.

The preset display duration threshold is a preset duration, for example, the preset display duration threshold is 24 hours.

In this embodiment, the current timestamp can be subtracted from a timestamp corresponding to the target multimedia object when the display page is displayed, and when the difference between the timestamps is greater than a preset display duration threshold, the user identification information is removed from the posting row. Meanwhile, the target multimedia object associated with the user identification information can be deleted. The benefit of this arrangement is: the user identification information of the displayed target user can be dynamically updated, so that the effect of improving the richness of the displayed content is achieved.

For example, the preset time threshold is 24 hours, for example, when the target user posts the target multimedia object at the time of 13:02 on October 1, the user identification information of the target user can be deleted at the time of 13:02 on October 2. If the situation of crossing time zones is involved, the invalidation time of the content is consistent with the time corresponding to the time zone where the user posting the target multimedia object is located.

According to the technical solution of the present embodiment, the user identification information of at least one target user can be displayed in the display interface, the display mode of the target multimedia object corresponding to the triggered user identification information is determined based on the triggering operation on the user identification information and the posting state of the current user, and then the target multimedia object is displayed based on the display mode. Thus, the following problems in the existing technology can be solved, i.e., for multimedia objects shared by other users, the content seen by all shared users is the same, and the individuation and interestingness are poor. Further it is possible to combine the post state and triggering operations of the user to determine the corresponding display mode, and then display the corresponding content based on the display mode, which achieves the technical effect of improving individuation of the content display and interestingness of interactive.

On the basis of the foregoing embodiment, a multimedia object posting prompt can be determined to post a multimedia object posting prompt based on target multimedia object, and a specific implementation manner thereof can refer to the technical solution of this embodiment. The technical terms that are the same as or corresponding to the above-mentioned embodiments are not described in detail herein.

In this embodiment, the determining that the multimedia object posting prompt is: determining a multimedia object posting prompt based on the running state of the target client. The target client is a client with the function of posting the multimedia object. The running state of the target client can include two states, namely a foreground running states and a background running states. The foreground running state can be understood as an operating mode which is visible on the desktop taskbar of the mobile terminal. The background running state refers to a running mode in which the related services can continue to run after the target client is turned off. For example, for some social interaction software, the background can obtain a message notification of the software when the software is not started.

The multimedia object posting prompt can be understood as a prompt message for posting the multimedia object to the user at the target client. The multimedia object posting prompt is specifically used to remind the user that the multimedia object can be posted based on the target client at this time.

On the basis of the above embodiment, the multimedia object posting prompt includes displaying a sharing pop-up window in a display interface of the target client.

Specifically, the running state of the target client can include multiple situations, and the multimedia object posting prompt is different from different running states, so that the user can be effectively prompted on the basis of not disturbing the user. If the running state of the target client is the foreground running state, the current page of the user is a display page corresponding to the target client at the moment, and the multimedia object posting prompt can be displayed on the current interface of the user in a countdown pop-up window. If the running state of the target client is the background running state, the current page of the user can be a display page corresponding to other software, or the mobile terminal device of the user can be in a desktop display state, and the multimedia object posting prompt can be a sharing pop-up window displayed in the display interface of the target client.

In this embodiment, in order to increase the interest of posting the multimedia object, the multimedia object posting prompt can be generated based on the prompt time corresponding to each target client.

Optionally, the prompt time corresponding to the target client is determined, and a multimedia object posting prompt is sent to the corresponding target client based on the prompt time.

The prompt time is the moment when the multimedia object posting prompt is to be sent, and the prompt time corresponding to each target client is randomly determined in the background.

It should be noted that, for each target client, the manner of determining the time for sending the multimedia object posting prompt is the same, and based on this, an example can be given by taking one of the target clients as an example. For one of the target clients, a multimedia object posting prompt is sent to the target client if the current timestamp is equal to the prompt timestamp.

For example, one multimedia object posting prompt can be pushed every day, with the pushing time every day being - time point randomly between 08:00 and 22: 00 (accurate to the minute). The prompting time is different and random for each target client. The time point of pushing the multimedia object posting prompt can be determined based on the prompt time corresponding to each target client. For example, if the prompt time of the target client corresponding to user A is 08:30, the prompt time of the target client corresponding to user B is 12:30, and the prompt time of the target client corresponding to user C is 16:30, the time point of pushing the multimedia object posting prompt to user A is 08:30, the time point of pushing the multimedia object posting prompt to user B is 12:30, and the time point of pushing the multimedia object posting prompt to user C is 16: 30. The benefit of this arrangement is: the multimedia object posting prompts are sent to the corresponding target clients based on the randomly determined prompt time, the time for sending the multimedia object posting prompts to each target client is different, the randomness of the time for sending the multimedia object posting prompts is improved, and therefore the interestingness of the multimedia object interaction method is improved.

According to the technical solution, the multimedia object posting prompt can be determined based on the running state of the target client, then the posting interface can be accessed based on the multimedia object posting prompt, the target multimedia object is determined based on the triggering operation on the posting interface, and the user identification information of the target user posting the target multimedia object is displayed, so that the technical effects of convenience and high efficiency of entering the posting process are facilitated.

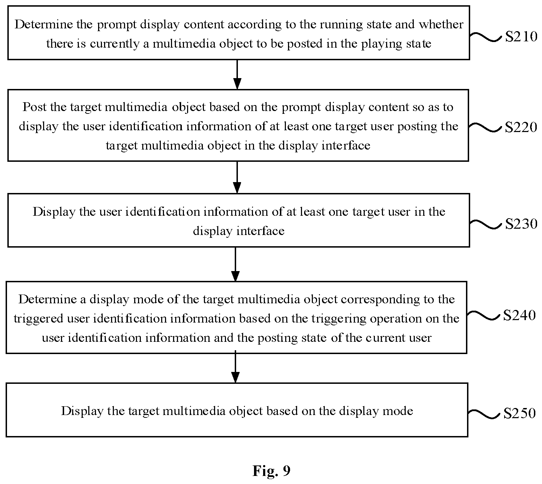

Fig. 9 is a schematic flow chart of an interaction method based on multimedia objects according to an embodiment of the present disclosure, and details of multiple display modes of the prompt display content are described below based on the foregoing embodiment, and specific embodiments thereof can refer to technical solutions of the present embodiment. The technical terms that are the same as or corresponding to the above-mentioned embodiments are not described in detail herein.

As shown in Fig. 9, the method specifically includes the following steps:
S210, determining the prompt display content according to the running state and whether there is currently a multimedia object to be posted in the playing state.

The prompt display content can be understood as the specific content of the prompt displayed when the user receives the multimedia object posting prompt. The multimedia object to be posted is a multimedia object which will be posted.

In this embodiment, when the combination of the running state of the target client and whether there is currently a multimedia object to be posted in the playing state is different, the determined prompt display content is different.

The first situation is that the running state is the foreground running state and there is a multimedia object to be posted in the playing state, and in this situation, the prompt display content is to share the multimedia object to be posted that is being appreciated and display countdown information.

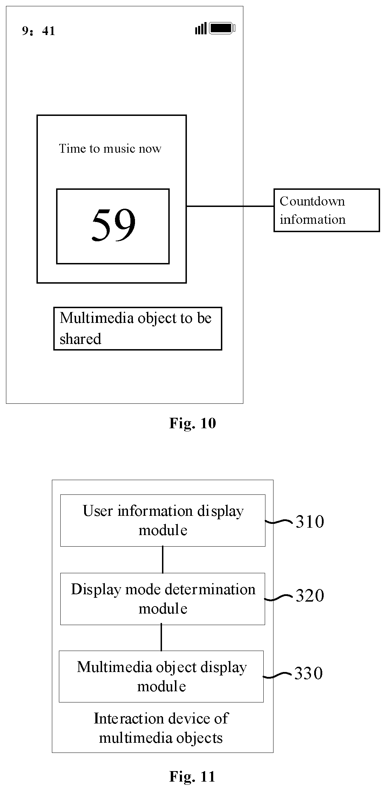

In this embodiment, if the running state of the target client is the foreground running state and there is a multimedia object to be posted in the playing state, it is indicated that the content currently displayed by the terminal device is a running interface of the target client. At this time, the prompt display content is to share the multimedia object to be posted that is being appreciated and display a countdown pop-up window, and countdown information is displayed in the countdown pop-up window. For example, at this time, the user display page is as shown in Fig. 10, a countdown number can be displayed in the countdown pop-up window, and the multimedia object to be posted that is being appreciated can be presented below the countdown pop-up window.

On the basis of the above embodiment, the countdown information is highlighted when the countdown information reaches a preset countdown threshold.

The preset countdown threshold is a preset value, for example, the preset countdown threshold can be 10. The highlighting can be displaying by adding a frame, or displaying by adding a special effect, or gradually displaying the display frame of the countdown information and adjusting the display size of the countdown according to a preset rule. The preset rule can be that the display size is enlarged first and then reduced, or the countdown display size is reduced first and then enlarged.

In this embodiment, the countdown information can dynamically display the countdown number, and when the countdown number reaches the preset countdown threshold, the countdown information can be highlighted. For example, if the preset countdown threshold can be 10, when the countdown information is 10, the display size of the countdown information displayed in the countdown pop-up window can be enlarged or reduced to a preset size according to the preset size, so that the countdown information presents a dynamic effect in the user display page, and the user is further prompted to post the target multimedia object.

On the basis of the above embodiment, the method further includes: when the countdown is finished and the multimedia object to be posted that is being appreciated is not shared, the state tag of the multimedia object to be posted is updated from a first state tag to a second state tag.

The first state tag and the second state tag are relative terms, and the specific content thereof can be set in the development stage. If in the terms of time dimension, the first state tag can be a "listening state tag", and the second state tag can be a "recently listened tag".

In this embodiment, if the countdown information is 0 and the multimedia object to be posted that is being appreciated is not posted, at this time, the state tag of the multimedia object to be posted can be modified, and the state tag of the multimedia object can be updated from the original "listening state tag" to the "recently listened tag", so as to implement the timely update of the state tag of the multimedia object to be posted.

It should be further noted that, if the countdown information is 0 and the multimedia object to be posted that is being appreciated is not posted, the display information of the current display interface can be updated. For example, the display information showing currently listening in the current display interface is replaced by the display information showing recently listened. Meanwhile, the display background of the current display interface can be updated.

The second situation is that the running state is the foreground running state and there is no multimedia object to be posted in the playing state, the prompt display content is determined to be displaying the multimedia object to be posted with the second state tag and/or the third state tag.

The third state tag is also relative to the first state tag and the second state tag, and the third state tag can be a "frequently listened tag".

In this embodiment, if the running state of the target client is the background running state and there is no multimedia object to be posted in the playing state, it indicates that the content currently displayed by the terminal device is a running interface of other software or a desktop interface, and at this time, prompt display content is determined to be displaying the multimedia object to be posted with the "recently listened tag" and/or the "frequently listened tag". Whether the state tag of the multimedia object to be posted is the "recently listened tag" and the "frequently listened tag" needs to be determined according to the historical playing data of the multimedia object to be posted.

On the basis of the above embodiment, the historical playing data includes historical playing frequency and/or historical playing time. Accordingly, the determining the state tag based on the historical playing data includes: determining the state tag based on a minimum interval duration between the historical playing time and the current time; and/or determining the state tag according to the historical playing frequency and a preset playing frequency threshold.

The historical playing frequency is the frequency of playing the multimedia object to be shared within a preset duration. The historical playing time is the time of playing the multimedia object to be shared within the preset duration. For example, the time of receiving the prompt display content by the user is at 8:00 on October 7, and since 8:00 on October 1, in the past 7 days, the number of times the multimedia object to be shared has been played is 3, which is at 8 a.m. on October 2, at 10 a.m. on October 4, and at 8 a.m. on October 6, therefore the historical playing frequency is 3, and these three times are historical playing time.

The minimum interval duration is the interval duration between the latest historical playing time and the current time within the preset time. For example, the current time is 8:00 on October 7, and the latest historical playing time is 8:00 on October 6, and the minimum interval duration is the difference between 8:00 on October 7 and 8:00 on October 8, that is, the minimum interval duration is 24 hours.

In this embodiment, if the minimum interval duration between the historical playing time and the current time is less than the preset interval threshold, it is determined that the state tag is the "recently listened tag"; and if the minimum interval duration between the historical playing time and the current time is greater than the preset interval duration threshold and the historical playing frequency is greater than the preset playing frequency threshold, it is determined that the state tag is the "frequently listened tag". The benefit of this arrangement is: the way of determining the state tag corresponding to the multimedia object to be shared is digital operation processing, so that the state tag corresponding to the multimedia object to be shared can be determined according to the historical playing data of the target multimedia object, and the efficiency of determining the state tag is improved.

On the basis of the above technical solution, it should be further noted that if the prompt display content includes the multimedia object to be posted with the second state tag and the third state tag, the multimedia object to be posted updated from the first state tag to the second state tag is highlighted.

It can be understood that, if the prompt display content includes the multimedia objects to be posted whose state tags are the second state tag and the third state tag, the multimedia objects with the second state tag and the multimedia objects to be posted with the third state tag can be displayed in groups, so that the user can clearly determine the state tags of the objects to be posted. Further, it is also possible of setting a function control corresponding to the second state tag and a function control corresponding to the third state tag on the display interface. Each function control can be associated with a plurality of multimedia objects to be posted corresponding to the state tags thereof. That is, after the function control corresponding to the second state tag is detected to be triggered, the multimedia object to be posted corresponding to the second state tag can be displayed in the current interface. Correspondingly, after the function control corresponding to the third state tag is triggered, the multimedia object to be posted corresponding to the third state tag can be displayed. It should be further noted that, if the multimedia objects to be posted corresponding to the second state tag and the third state tag are shown in the same interface, the multimedia object to be posted updated from the first state tag to the second state tag can be highlighted. Optionally, listed separately, displayed in different colors, or displayed in different fonts.

S220, posting the target multimedia object based on the prompt display content so as to display the user identification information of at least one target user posting the target multimedia object in the display interface.

It can be understood that, after entering the posting process, each user can trigger to select a corresponding object to be posted, and when triggering the object to be posted, an edit box of the object to be posted can be displayed on the display interface to edit corresponding information in the edit box. The information can be text information, emotion information, image information. Optionally, the information is used to represent comment content or recommendation content of the object to be posted. Or, when the object to be posted is determined to be posted, an edit box corresponding to the object to be posted is displayed to edit corresponding text information. Or, an edit box can be displayed so that the information can be edited directly in the edit box after the object to be posted is triggered. Based on the above, the information of the object to be posted can be marked at any time before the object to be posted is posted.

S230, displaying the user identification information of at least one target user in the display interface.

S240, determining a display mode of the target multimedia object corresponding to the triggered user identification information based on the triggering operation on the user identification information and the posting state of the current user.

S250, displaying the target multimedia object based on the display mode.

According to the technical solutions of the embodiment of the disclosure, firstly, the prompt display content is determined based on an running state and whether there is currently a multimedia object to be posted in the playing state. Further, the user identification information of at least one target user is displayed in the display interface. In addition, a display mode of the target multimedia object corresponding to the triggered user identification information is determined based on triggering operation on the user identification information and the posting state of the current user, and the target multimedia object is displayed based on the display mode. According to the technical solution provided by the embodiment of the disclosure, the prompt display content can be determined according to the running state and whether there is currently a multimedia object to be posted in the playing state, the diversity of the manner for determining the prompt display content is enhanced, there are a various forms of the prompt display contents, the personalized requirements of users are met, and the use experience of the users is enriched.

On the basis of the foregoing embodiments, in order to facilitate a user to post a target multimedia object, a corresponding target multimedia object can be posted, and a plurality of convenient entries can be set to invite corresponding target users based on the convenient entries.

Optionally, the area to which the user identification information of at least one target user is displayed further includes a control for inviting the target user, so as to invite the at least one target user based on a trigger operation on the control; and/or at least one user to be selected is displayed based on the trigger operation of the object to be posted so as to determine at least one target user based on the trigger operation of the at least one user to be selected.

It can be understood that, if the number of the at least one target user is large, at this time, not all the user identification information can be displayed in the display area of the terminal device. At this time, the user identification information can be slid in the control, and an invitation control can be displayed at the last position of the user identification information. The current user can trigger the invitation control to invite at least one target user based on a triggering operation on the invitation control to cause the target user to post the corresponding target multimedia object. Otherwise, when the triggering object to be posted is detected, a user selection list including at least one user to be selected can be displayed, and the target user to be invited is determined based on the triggering operation of the current user on the user selection list.

Fig. 11 is a schematic structural diagram of an interaction apparatus based on multimedia objects according to an embodiment of the disclosure, and as shown in Fig. 11, the apparatus includes: a user information display module 310, a display mode determination module 320, and a multimedia object display module 330.

The user information display module 310 is configured to display user identification information of at least one target user in a display interface; wherein the target user is a user who posts a target multimedia object.

The display mode determining module 320 is configured to determine a display mode of a target multimedia object corresponding to a triggered user identification information based on a triggering operation on the user identification information and a posting state of a current user.

The multimedia object display module 330 is configured to display the target multimedia object based on the display mode.

On the basis of the technical solutions, the interaction apparatus of the multimedia object is also configured to display the user identification information and a corresponding state tag of one target user in the display interface; and wherein the state tag corresponds to a playing state when the target multimedia object is posted.

On the basis of the above technical solutions, the posting state includes a posted state or an unposted state, and the display mode includes: a first display mode corresponding to the posted state and a second display mode corresponding to the unposted state; and the first display mode and the second display mode are different in visualization parameter of a content related to the target multimedia object.

On the basis of the above technical solutions, the visualization parameter corresponding to the first display mode includes the visualization parameter for which all associated content is visible, and the visualization parameter corresponding to the second display mode includes that the visualization parameter for which the associated content is invisible and/or information that guide a posting of the target multimedia object.

On the basis of the foregoing technical solutions, the display mode determining module 320 is further configured to play a segment content or a whole content of the target multimedia object if the current user in the posted state triggers a control for playing the target multimedia object.

On the basis of the foregoing technical solutions, the display mode determining module 320 is further configured to display an associated content of the target multimedia object associated with the user identification information in the second display mode if the current user in the unposted state triggers the user identification information.

On the basis of the technical solutions, the interaction apparatus of the multimedia object is also configured to not display the user identification information when a display duration of the user identification information reaches a preset display duration threshold.

On the basis of the technical solutions, the interaction apparatus of the multimedia object also includes a post prompt determining unit.

The posting prompt determining unit is configured to determine a multimedia object posting prompt based on a running state of a target client.

On the basis of the technical solutions, the multimedia object posting prompt includes displaying a sharing pop-up window in a display interface of the target client.

On the basis of the above technical solutions, the post prompt determining unit is further configured to determine a prompt time corresponding to the target client, and send a multimedia object posting prompt to a corresponding target client based on the prompt time.

On the basis of the technical solutions, the interaction apparatus of the multimedia object also includes a prompt content determining unit.

The prompt content determining unit is configured to determine a prompt display content according to a running state and whether there is currently a multimedia object to be posted in the playing state.

On the basis of the above technical solutions, the prompt content determining unit is further configured to, if the running state is foreground running state and there is currently a multimedia object to be posted in the playing state, the prompt display content is to share the multimedia object to be posted in the playing state, and display countdown information.

On the basis of the above technical solutions, the prompt content determining unit is further configured to highlight the countdown information when the countdown information reaches a preset countdown threshold value.

On the basis of the above technical solutions, the prompt content determining unit is further configured to, when the countdown is finished and the multimedia object to be posted in the playing state is not shared, update a state tag of the multimedia object to be posted from a first state tag to a second state tag.

On the basis of the foregoing technical solutions, the prompt content determining unit is further configured to determine that the prompt display content is to display the multimedia object to be posted with a second state tag and/or a third state tag if the running state is a foreground running state and there is currently no multimedia object to be posted in the playing state.

On the basis of the above technical solutions, if the prompt display content includes the multimedia object to be posted with the second state tag and the third state tag, the multimedia object to be posted updated from the first state tag to the second state tag is highlighted.

On the basis of the technical solutions, the interaction apparatus of the multimedia object is also configured to further comprises a control for inviting the target user in an area where the user identification information of at least one target user is shown, so as to invite at least one target user based on a triggering operation on the control; and/or
display at least one user to be selected based on the triggering operation of the object to be posted so as to determine the at least one target user based on the triggering operation of the at least one user to be selected.

According to the technical solution of the present embodiment, the user identification information of at least one target user can be displayed in the display interface, the display mode of the target multimedia object corresponding to the triggered user identification information is determined based on the triggering operation on the user identification information and the posting state of the current user, and then the target multimedia object is displayed based on the display mode. Thus, the following problems in the existing technology can be solved, i.e., for multimedia objects shared by other users, the content seen by all shared users is the same, and the individuation and interestingness are poor. Further it is possible to combine the post state and triggering operations of the user to determine the corresponding display mode, and then display the corresponding content based on the display mode, which achieves the technical effect of improving individuation of the content display and interestingness of interactive.

The interaction apparatus of the multimedia object provided by the embodiment of the disclosure can perform the interaction method based on the multimedia object provided by any embodiment of the disclosure, and has corresponding functional modules and advantageous effects of the execution method.

It should be noted that, the units and modules included in the apparatus are merely divided according to functional logic, but are not limited to the above division as long as the corresponding functions can be implemented. In addition, specific names of the functional units are also only used for distinguishing one functional unit from another, and are not used for limiting the protection scope of the embodiments of the present disclosure.

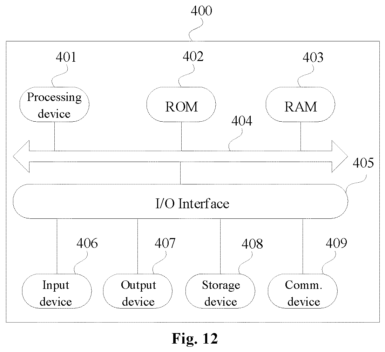

Fig. 12 is a schematic structural diagram of an electronic device according to an embodiment of the present disclosure. Referring now to Fig. 12, a schematic diagram of an electronic device (e.g., the terminal apparatus or the server in Fig. 12) 400 suitable for implementing embodiments of the present disclosure is shown. The terminal device in the embodiments of the present disclosure can include, but is not limited to, a mobile terminal such as a mobile phone, a notebook computer, a digital broadcast receiver, a PDA (personal digital assistant), a PAD (tablet computer), a PMP (portable multimedia player), a vehicle terminal (e.g., a car navigation terminal), and the like, and a fixed terminal such as a digital TV, a desktop computer, and the like. The electronic device shown in Fig. 12 is only an example, and should not bring any limitation to the functions and the scope of use of the embodiments of the present disclosure.

As shown in Fig. 12, electronic device 400 can include a processing device (e.g., central processing unit, graphics processor, etc.) 401 that can perform various appropriate actions and processes in accordance with a program stored in a read-only memory (ROM) 402 or a program loaded from a storage device 408 into a random access memory (RAM) 403. In the RAM 403, various programs and data necessary for the operation of the electronic device 400 are also stored. The processing device 401, the ROM 402, and the RAM 403 are connected to each other through a bus 404. An input/output (I/O) interface 405 is also connected to bus 404.

Generally, the following devices can be connected to the I/O interface 405: input device 406 including, for example, a touch screen, a touch pad, a keyboard, mouse, a camera, a microphone, accelerometer, gyroscope and the like; an output device 407 including, for example, a Liquid Crystal Display (LCD), a speaker, a vibrator, and the like; storage device 408 including, for example, magnetic tape, hard disk and the like; and a communication device (Comm. device) 409. The communication device 409 can allow the electronic device 400 to communicate with other devices, either wirelessly or by wire, to exchange data. While Fig. 12 illustrates an electronic device 400 having various means, it is to be understood that not all illustrated means are required to be implemented or provided. More or fewer devices can be alternatively implemented or provided.

In particular, the processes described above with reference to the flow diagrams can be implemented as computer software programs, according to embodiments of the present disclosure. For example, embodiments of the present disclosure include a computer program product including a computer program carried on a non-transitory computer readable medium, the computer program containing program code for performing the method illustrated by the flow chart. In such an embodiment, the computer program can be downloaded and installed from a network via the communication device 409, or installed from the storage device 408, or installed from the ROM 402. The computer program, when executed by the processing device 401, performs the above-described functions defined in the methods of the embodiments of the present disclosure.

The names of messages or information exchanged between devices in the embodiments of the present disclosure are for illustrative purposes only, and are not intended to limit the scope of the messages or information.

The electronic device provided by the embodiment of the present disclosure and the interaction method based on the multimedia object provided by the above embodiment belong to the same inventive concept, and technical details that are not described in detail in the embodiment can be referred to the above embodiment, and the embodiment and the above embodiment have the same advantageous effects.

The disclosed embodiments provide a computer storage medium on which a computer program is stored, which when executed by a processor performs the interaction method based on multimedia object provided by the above embodiments.

It should be noted that the computer readable medium of the present disclosure can be a computer readable signal medium or a computer readable storage medium or any combination of the two. A computer readable storage medium can be, for example, but not limited to, an electronic, magnetic, optical, electromagnetic, infrared, or semiconductor system, apparatus, or device, or any combination of the foregoing. More specific examples of the computer readable storage medium can include, but are not limited to: an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium can be any tangible medium that can contain, or store a program for use by or in connection with an instruction execution system, apparatus, or device. In contrast, in the present disclosure, a computer readable signal medium can include a propagated data signal with computer readable program code embodied therein, for example, in baseband or as part of a carrier wave. Such a propagated data signal can take any of a variety of forms, including, but not limited to, electro-magnetic, optical, or any suitable combination thereof. A computer readable signal medium can be any computer readable medium that is not a computer readable storage medium and that can communicate, propagate, or transport a program for use by or in connection with an instruction execution system, apparatus, or device. Program code embodied on a computer readable medium can be transmitted using any appropriate medium, including but not limited to: electrical wires, optical cables, radio frequency (RF) and so forth, or any suitable combination of the foregoing.

In some embodiments, the clients and the servers can communicate using any currently known or future developed network Protocol, such as HyperText Transfer Protocol (HTTP), and can be interconnected with any form or medium of digital data communication (e.g., a communication network). Examples of communication networks include a local area network ("LAN"), a wide area network ("WAN"), the Internet, and peer-to-peer networks (e.g., ad hoc peer-to-peer networks), as well as any currently known or future developed network.

The computer readable medium can be embodied in the electronic device or can be separate and not incorporated into the electronic device.

The computer readable medium carries one or more programs which, when executed by the electronic device, cause the electronic device to:
display user identification information of at least one target user in a display interface; the target user is a user who posts a target multimedia object;
determine a display mode of a target multimedia object corresponding to a triggered user identification information based on a triggering operation on the user identification information and a posting state of a current user; and
display the target multimedia object based on the display mode.

Embodiments of the present disclosure also provide a computer program that, when executed by a computer processor, causes the computer processor to perform the interactive method based on multimedia object as in any of the embodiments of the present disclosure.

Computer program code for carrying out operations for aspects of the present disclosure can be written in any combination of one or more programming languages, including but not limited to an object oriented programming language such as Java, Smalltalk, C++, including conventional procedural programming languages, such as the "C" programming language or similar programming languages. The program code can execute entirely on the user's computer, partly on the user's computer, as a stand-alone software package, partly on the user's computer and partly on a remote computer or entirely on the remote computer or server. In the latter scenario, the remote computer can be connected to the user's computer through any type of network, including a Local Area Network (LAN) or a Wide Area Network (WAN), or the connection can be made to an external computer (for example, through the Internet using an Internet service provider).

The flowchart and block diagrams in the figures illustrate the architecture, functionality, and operation of possible implementations of systems, methods and computer program products according to various embodiments of the present disclosure. In this regard, each block in the flowchart or block diagrams can represent a module, a segment of program, or a portion of code, which includes one or more executable instructions for implementing the specified logical function. It should also be noted that, in some alternative implementations, the functions noted in the block can occur out of the order noted in the figures. For example, two blocks shown in succession can, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure can be implemented by software or hardware. The name of a unit does not in some cases constitute a limitation of the unit itself.

The functions described herein above can be performed, at least in part, by one or more hardware logic components. For example, without limitation, exemplary types of hardware logic components that can be used include: field Programmable Gate Arrays (FPGA), Application Specific Integrated Circuits (ASIC), Application Specific Standard Products (ASSP), system on a chip (SOC), Complex Programmable Logic Devices (CPLD), and the like.

In the context of this disclosure, a machine-readable medium can be a tangible medium that can contain, or store a program for use by or in connection with an instruction execution system, apparatus, or device. The machine-readable medium can be a machine-readable signal medium or a machine-readable storage medium. A machine-readable medium can include, but is not limited to, an electronic, magnetic, optical, electromagnetic, infrared, or semiconductor system, apparatus, or device, or any suitable combination of the foregoing. More specific examples of a machine-readable storage medium would include an electrical connection based on one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

## Claims

1. An interaction method based on multimedia objects, comprising:
displaying user identification information of at least one target user in a display interface; the target user is a user who posts a target multimedia object;
determining a display mode of a target multimedia object corresponding to a triggered user identification information based on a triggering operation on the user identification information and a posting state of a current user; and
displaying the target multimedia object based on the display mode.

2. The method of claim 1, further comprising:
displaying the user identification information and a corresponding state tag of one target user in the display interface; and
wherein the state tag corresponds to a playing state when the target multimedia object is posted.

3. The method of claim 1, wherein the posting state includes a posted state or an unposted state, and the display mode includes:
a first display mode corresponding to the posted state and a second display mode corresponding to the unposted state;
the first display mode and the second display mode are different in visualization degree of a content related to the target multimedia object.

4. The method of claim 3, wherein the visualization degree corresponding to the first display mode includes that all associated content is visible, and the visualization degree corresponding to the second display mode includes that the associated content is invisible and/or information that guide a posting of the target multimedia object.

5. The method of claim 3, further comprising:
if the current user in the posted state triggers a control for playing the target multimedia object, playing a segment content or a whole content of the target multimedia object.

6. The method of claim 3, wherein the determining a display mode of a target multimedia object corresponding to a triggered user identification information based on a triggering operation on the user identification information and a posting state of a current user comprises:
if the current user in the unposted state triggers the user identification information, displaying an associated content of the target multimedia object associated with the user identification information in the second display mode.

7. The method of claim 1, further comprising:
when a display duration of the user identification information reaches a preset display duration threshold, not displaying the user identification information.

8. The method of claim 1, further comprising:
determining a multimedia object posting prompt based on a running state of a target client; and
if the target client is in a foreground running state, the multimedia object posting prompt comprises a posting entry so as to post the target multimedia object based on the posting entry.

9. The method of claim 1, further comprising:
determining a prompt time corresponding to the target client, and sending a multimedia object posting prompt to a corresponding target client based on the prompt time.

10. The method of claim 1, further comprising:
determining a prompt display content according to a running state and whether there is currently a multimedia object to be posted in the playing state; and
posting the target multimedia object based on the prompt display content.

11. The method of claim 10, wherein the determining a prompt display content according to a running state and whether there is currently a multimedia object to be posted in the playing state comprises:
if the running state is foreground running state and there is currently a multimedia object to be posted in the playing state, the prompt display content is to share the multimedia object to be posted in the playing state, and display countdown information.

12. The method of claim 11, further comprising:
when the countdown information reaches a preset countdown threshold value, highlighting the countdown information.

13. The method of claim 11 or 12, further comprising:
when the countdown is finished and the multimedia object to be posted in the playing state is not shared, updating a state tag of the multimedia object to be posted from a first state tag to a second state tag.

14. The method of claim 10, wherein the determining a prompt display content according to a running state and whether there is currently a multimedia object to be posted in the playing state comprises:
if the running state is a foreground running state and there is currently no multimedia object to be posted in the playing state, determining that the prompt display content is to display the multimedia object to be posted with a second state tag and/or a third state tag.

15. The method of claim 14, wherein if the prompt display content includes the multimedia object to be posted with the second state tag and the third state tag, the multimedia object to be posted updated from the first state tag to the second state tag is highlighted.

16. The method of claim 10, further comprising:
before the target multimedia object is posted, editing information of the target multimedia.

17. The method of claim 1, further comprising a control for inviting the target user in an area where the user identification information of at least one target user is shown, so as to invite at least one target user based on a triggering operation on the control; and/or
displaying at least one user to be selected based on the triggering operation of the object to be posted so as to determine the at least one target user based on the triggering operation of the at least one user to be selected.

18. An interactive apparatus based on multimedia objects, comprising:
a user information display module configured to display user identification information of at least one target user in a display interface; the target user is a user who posts a target multimedia object;
a display mode determining module configured to determine a display mode of a target multimedia object corresponding to a triggered user identification information based on a triggering operation on the user identification information and a posting state of a current user; and
a multimedia object display module configured to display the target multimedia object based on the display mode.

19. An electronic device, wherein the electronic device comprises:
one or more processors;
a storage device to store one or more programs, and
the one or more programs, when executed by the one or more processors, cause the one or more processors to perform the interaction method based on multimedia object of any of claims 1-17.

20. A storage medium containing computer-executable instructions, wherein computer-executable instructions, when executed by a computer processor, cause the computer processor to perform the interaction method based on multimedia object of any of claims 1-17.
